# EUROPEAN PATENT APPLICATION

(11) **EP 3 130 971 A1**
(43) Date of publication of application: **15.02.2017**
(21) Application number: 16181221.9
(22) Date of filing: 26.07.2016
(51) Int. Cl.: G05B 19/401, B23Q 17/12, B23P 6/00

(54) **MACHINE TOOLPATH COMPENSATION USING VIBRATION SENSING**

(30) Priority: 08.08.2015 US 201514821691
(71) Applicant: General Electric Company, Schenectady, NY 12345 (US)
(72) Inventor: COMPAGNAT, Jessen, Bromont, Québec J2L 1S6 (CA); ETHIER, Marc Andre, Cincinnati, OH Ohio 45215 (US); LARAMEE, Jean-Pierre, Cincinnati, OH Ohio 45215 (US); DE CHAMPLAIN, Dany, Cincinnati, OH Ohio 45215 (US)
(74) Representative: Pöpper, Evamaria

(57) **Abstract**

A method for machining a workpiece (18) using a programmable, numerically controlled machining system (8) by calculating or retrieving a compensated toolpath (35) based on comparing contact position (29) from monitoring a vibration signal from a vibration sensor (28) during probing of workpiece (18) with rotating tool (12) during relative motion therebetween. Contact position (29) is compared to position from predetermined toolpath (34) and wherein the predetermined toolpath (34) extends between initial machining point (36) and end machining point (38). Machining the workpiece (18) is done along compensated toolpath (35). The method may be done for repeated passes (40) of machining. The compensated toolpath (35) may include an angle offset (48) to a machining path coordinate system (46) of the predetermined toolpath (34). Workpiece (18) may be mounted in a multi-axis manipulator (16) of machining system (8) for the probing and machining. Multi-axis manipulator (16) may be computer controlled and may be part of a robot.

## Description

### BACKGROUND OF THE INVENTION

### FIELD OF THE INVENTION

This invention relates to numerically controlled machining systems, adaptive machining and, in particular, to a system and method for machining a workpiece using vibration sensing.

### DESCRIPTION OF RELATED ART

Precision machining is known for manufacturing parts with general-purpose, numerically controlled machining systems. Various automated methods and systems have been developed for cutting or other removal of material and for making cutter adjustments using an ordinary numerical control cutter offsets. These adjustments of the cutting tool are necessary to take into account a large number of variables, such as wear of the cutting tool, repositioning and/or replacement of the cutting tool, as well as dimensional changes of the cutting tool, of the workpiece and of the machining apparatus itself due to such factors as heating, deflection under load, and the like.

It is known to use tool offsets with numerically controlled machine tools after the machine is set up for the manufacture of a particular workpiece or part. Closed loop machining apparatus and methods have been developed to automate the tool offset or compensation process. Computer-operated numerical control systems carry out the computations of offsets. It is also known to mount a tool sensor such as a touch trigger probe or vibration sensor on the bed of the machining apparatus or on a pivotal arm that can be swung out of the way when desired.

The position of the cutting tool can be calibrated against such a probe by noting the tool position when contact with the probe occurs. From the observed deviations between the programmed and the actual positions, a compensating offset may be determined and stored in the memory associated with the computer numerical control means. The offset compensates for the difference between the programmed contact position and the actual contact position. Such a system and method is disclosed in U.S. Patent No. 4,382,215.

U.S. Patent No. 4,428,055 discloses a system and method for automatically machining a workpiece under computer numerical control in which the cutting tool is set automatically. Vibration sensing detects contact between a cutting edge of the cutting tool and position reference surfaces and the cutting edge is calibrated against these surfaces under closed loop control. The deviation between the programmed and the actual positions of the cutting edge at each reference surface is determined and an initial compensating tool position offset is automatically provided in each axis and is entered into numerical control means.

The initial compensating tool position offset is used to determine where a tool starts cutting along a predetermined toolpath. A toolpath is a path through space that the tip of a cutting tool follows on its way to producing the desired geometry of the workpiece. The toolpath has an initial machining point and an end machining point in space. The initial compensating tool position offset is an offset to the initial machining point but this compensation does not effect or change the toolpath between the initial and end machining points.

There is need for a more accurate, better, faster, and less expensive method for CNC machining. There is also a need for a more efficient CNC machining method that is highly adaptive to workpiece variation. There is need for a more accurate, method for CNC machining that takes into account workpiece variation from piece to piece. There is need for a more accurate determination of the precise position and machining of the part with the rotating tool regardless of abrasive wear of the tool and/or workpiece deformation.

### SUMMARY OF THE INVENTION

A method for machining a workpiece with a programmable, numerically controlled machining system, the system including numerical control means adapted to operate under the direction of a predetermined machining program including a predetermined toolpath extending between an initial machining point and an end machining point and at least one rotating cutting tool powered by a computer numerically controlled machine. The method includes the following steps: (1) probing the workpiece with the rotating tool during relative motion therebetween, (2) monitoring a vibration signal from a vibration sensor mounted in the machining system, (3) recording a contact position of the workpiece when the monitored vibration signal indicates contact between the rotating tool and the workpiece, (4) comparing the recorded contact position to a predetermined initial machining point of the predetermined toolpath and calculating or retrieving a compensated toolpath based on the comparison wherein the predetermined toolpath extends between the initial machining point and the end machining point, and (5) machining the workpiece along the compensated toolpath.

The method may further include machining the workpiece along multiple passes wherein steps (1) through (5) are repeated for two or more of the passes. The method may further include calibrating the machine by probing a calibration part having known dimensions with the cutting tool while monitoring a vibration signal from the vibration sensor during the probing with the cutting tool. The calibrating may further include determining tool parameters of the cutting tool during the calibrating that are influenced by at least one of a tool diameter, a tool geometry, and distance between the tool and a workpiece guide mounted to the machine.

The compensated toolpath may include an angle offset to a machining path coordinate system of the predetermined toolpath. The workpiece may be machined with multiple passes wherein steps (1) through (5) are repeated for two or more of the passes.

The workpiece may be mounted in a multi-axis manipulator of the numerically controlled machining system before step (1). During step (1), the probing includes moving the multi-axis manipulator holding the workpiece to provide the relative motion between the rotating tool and the workpiece, and during step (5), the machining the workpiece along the compensated toolpath includes moving the multi-axis manipulator holding the workpiece.

The machine being a grinder and the rotating tool a grinding wheel.

One embodiment of the method is for repairing an airfoil, tip using the programmable, numerically controlled machining system, including a grinding wheel powered by a computer numerically controlled machine. Before machining repair material is added at the tip of the airfoil. The grinding wheel powered by the machine makes machining passes to machine away excess repair material and blend the airfoil surface of the airfoil at different chordwise locations along the airfoil between leading and trailing edges of the airfoil. At least one of the machining passes includes the following steps:
(1) probing the airfoil with the rotating grinding wheel during relative motion therebetween,
(2) monitoring a vibration signal from a vibration sensor mounted in the machining system,
(3) recording a contact position of the airfoil when the monitored vibration signal indicates contact between the rotating grinding wheel and the airfoil,
(4) comparing the recorded contact position to a predetermined initial machining point of the predetermined toolpath and calculating or retrieving a compensated toolpath based on the comparison wherein the predetermined toolpath extends between the initial machining point and the end machining point, and
(5) machining the airfoil along the compensated toolpath.

A gas turbine engine blade containing the airfoil may be mounted in a multi-axis manipulator of the numerically controlled machining system before step (1) and the probing the airfoil with the rotating grinding wheel during relative motion therebetween includes moving the multi-axis manipulator holding the blade relative to the machine.

### BRIEF DESCRIPTION OF THE DRAWINGS

The foregoing aspects and other features of the invention are explained in the following description, taken in connection with the accompanying drawings where:
FIG. 1 is a diagrammatical view illustration of a cutting machine with a rotatable tool and a vibration sensor for adjusting a predetermined toolpath to machine a workpiece.
FIG. 2 is a diagrammatical view illustration comparing an exemplary predetermined toolpath to a compensated toolpath for machining the workpiece illustrated in FIG. 1.
FIG. 3 is a diagrammatical view illustration of steps of the machining using the compensated toolpath illustrated in FIG. 2.
FIG. 4 is a diagrammatical view illustration of an angle offset between the predetermined and compensated toolpaths and predetermined and compensated tool coordinate systems of the predetermined and compensated toolpaths illustrated in FIG. 2.
FIG. 5 is a diagrammatical view illustration of the CNC machine and a calibration part in a manipulator for calibrating the grinding machine and the manipulator illustrated in FIG. 1.
FIG. 6 is a flow chart of the exemplary toolpath compensation method illustrated in FIG. 1.
FIG. 7 is a diagrammatical view illustration of an airfoil repair with repair material on the airfoil of the exemplary workpiece illustrated in FIG. 1.
FIG. 8 is a diagrammatical view illustration of machining multiple passes of the airfoil repair illustrated in FIG. 7.
FIG. 9 is a diagrammatical view illustration of a polished the airfoil repair of airfoil illustrated in FIG. 8.

### DETAILED DESCRIPTION OF THE INVENTION

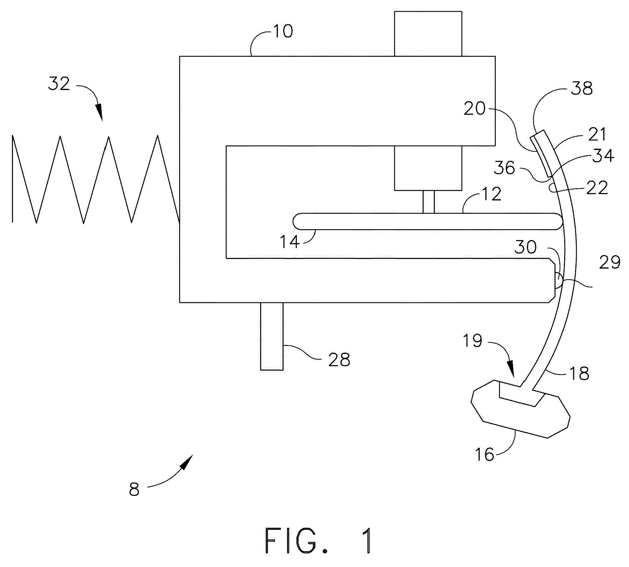

Illustrated in FIG. 1 is an exemplary embodiment of a CNC (computer numerically controlled) machining system 8 including a cutting machine 10 illustrated herein as a grinder having an exemplary cutting tool 12 illustrated herein as a grinding wheel 14. The CNC machining system 8 includes a multi-axis manipulator 16 which holds and moves a workpiece 18 with respect to the cutting tool 12. The multi-axis manipulator 16 is articulated. One example of such a multi-axis manipulator is a LR Mate 200iC Series electric servo-driven mini-robot sold by FANUC Robotics. In the case of the machine 10 illustrated in FIG. 1, the workpiece 18 is a gas turbine engine blade 19 and the exemplary method illustrated herein is grinding away excess metal 20 on a surface 22 of an airfoil 21 of the blade 19 for the purpose of blending the airfoil surface 22. A multi-axis manipulator is disclosed in United States Patent Application 20140316573 entitles "ROBOT SYSTEM HAVING A ROBOT FOR CONVEYING A WORKPIECE" to Takahiro Iwatake published October 23, 2014 and incorporated herein by reference. The multi-axis manipulator 16 is CNC controlled and may be a robot controlled by a robot controller such as one available from FANUC Robotics.

A vibration sensor 28 such as an accelerometer located on the CNC machining system 8 detects a vibration when the grinding wheel 14 contacts the workpiece 18 which is held, moved, and positioned by the manipulator 16. The vibration sensor 28 is illustrated as being mounted on the machine 10 but may be alternatively mounted on the manipulator 16. The vibration sensor 28 is monitored until the contact vibration is detected. The detection triggers the manipulator 16 to capture its current position, which represents the precise contact position of the workpiece 18 at the time and point of actual contact and may be referred to as an actual contact position 29.

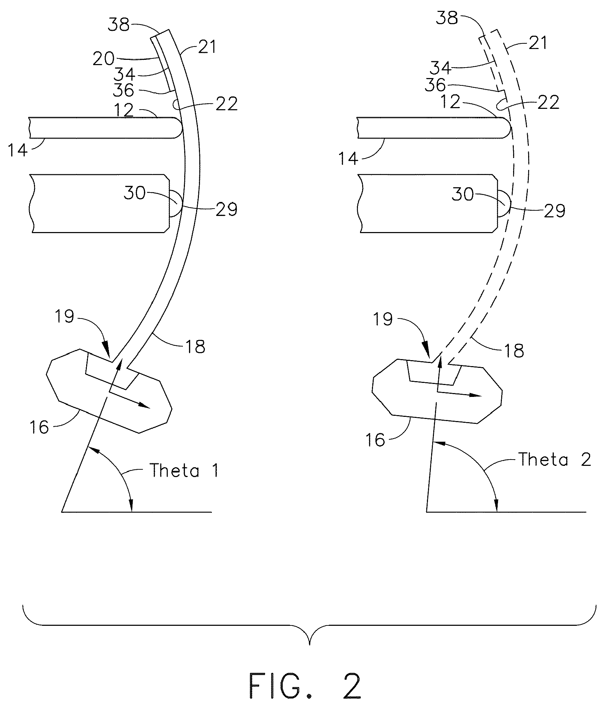

Referring further to FIGS. 2-4, the cutting tool 12 illustrated herein is the grinding wheel 14 guided through a toolpath 34. The multi-axis manipulator 16 of the CNC machining system 8 holds and moves a workpiece 18 with respect to the cutting tool 12. The toolpath 34 is a path through space that the tip of the cutting tool 12 follows to produce the desired geometry of the workpiece 18. The toolpath 34 has an initial machining point 36 and an end machining point 38 in space.

An initial compensating tool position offset has and may be used to determine where a tool starts cutting along a predetermined toolpath 34 or where the actual or compensated initial machining point 36 is placed. The initial compensating tool position offset is an offset to the initial machining point 36 but this compensation does not effect or change the toolpath 34 between the initial and end machining points 36, 38. During machining, a workpiece guide 30 mounted on the machine 10 helps guide the workpiece 18 through the toolpath 34 during each of one or more passes 40 of the grinding wheel 14 against the workpiece 18.

Referring to FIG. 1, a compliance means 32 acting on the machine 10 for urging the grinding wheel 14 against the workpiece 18 insures the complex-geometry workpiece 18 stays in contact with the grinding wheel 14 and the workpiece guide 30 throughout the machining process. The compliance means 32 may be an air pressure or spring powered device operable to urge the guide 30 and the grinding wheel 14 against the workpiece 18. An air pressure powered compliance means 32 may be with the use of a rotary air cylinder to ensure constant pressure on the workpiece 18 during probing and during machining.

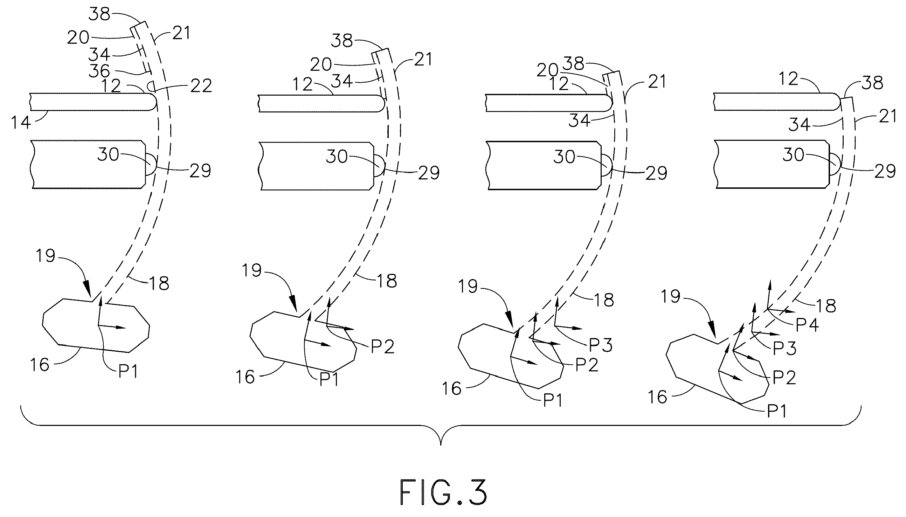

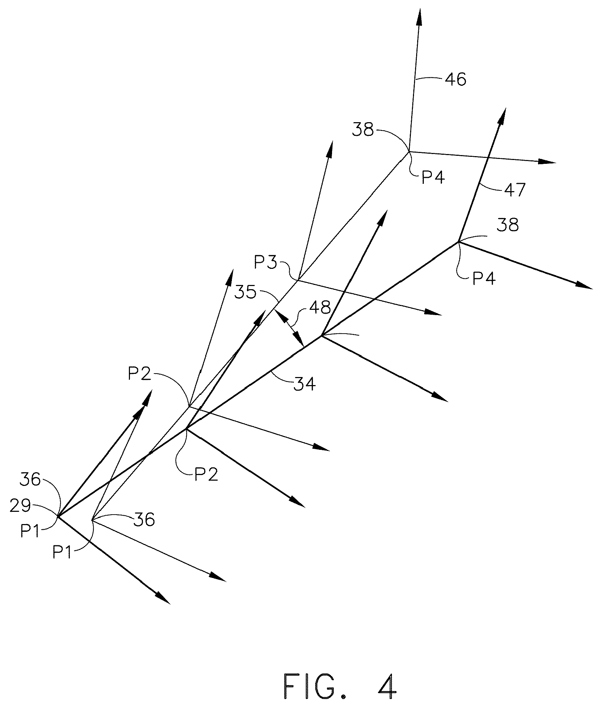

The CNC machining system 8 is programmed or operable to adjust or compensate a predetermined toolpath 34 so that the CNC system 8 causes the cutting tool 12 (illustrated herein as the grinding wheel 14) to follow a compensated toolpath 35 from an initial machining point 36 to an end machining point 38 as illustrated herein in FIGS. 3 and 4. The predetermined toolpath 34 follows a nominal part shape stored in the CNC machining system 8 as a 3D model from which the predetermined toolpath 34 may be extracted. The compensated toolpath 35 is different from the predetermined toolpath 34 at least between the initial and end machining points 36, 38. The predetermined toolpath 34 includes a predetermined initial machining point 36 or position which may be different from the actual contact position 29. A comparison is made of the recorded contact position 29 to a predetermined contact position such as the initial and end machining points 36, 38 from a predetermined toolpath 34 stored in a computer. If the comparison indicates a difference, then the workpiece is machined along the compensated toolpath 35.

One exemplary machining path compensation can be an angle offset 48 to a machining path coordinate system 46 as illustrated in FIGS. 2-4. An angular difference of Theta2-Theta1, illustrated in FIG. 2, may be used to provide an angle offset 48 on the machining path coordinate system 46. Basically, the angular difference tells you how much to rotate the theoretical or predetermined coordinate system 46 to a compensated coordinate system 47 along the compensated toolpath 35 and, consequently, the toolpath itself to accommodate the variation in the part or workpiece 18. Respective first through fourth positions P1-P4 along both the predetermined and compensated toolpaths 34, 35 are indicated in FIG. 4. The angle offset 48 is illustrated at each of the positions P1-P4 along the compensated toolpath 35. The compensated coordinate system 47 along the compensated toolpath 35 is rotated by the angle offset 48 at each of the first through fourth positions P1-P4 along both the predetermined and compensated toolpaths 34, 35 are indicated in FIG. 4.

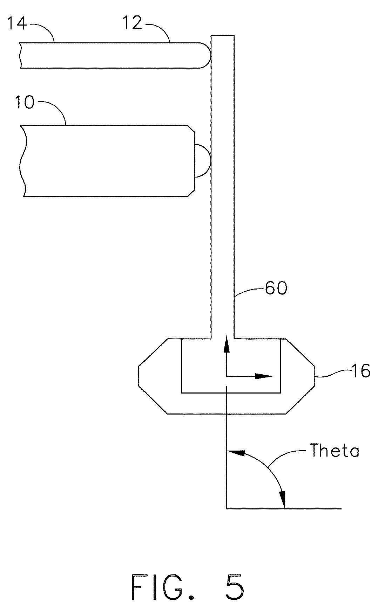

FIG. 5 illustrates an exemplary calibration part 60 or workpiece mounted on the multi-axis manipulator 16 of the CNC machining system 8 for calibrating the machine 10 with the cutting tool 12 illustrated herein as the grinding machine and the grinding wheel 14. Probing by vibration sensing is used to measure the angle Theta between the calibration part which has known dimensions and the abrasive grinding wheel 14 when they are in contact. Calibration is used to determine tool parameters of the abrasive grinding wheel 14 that are influenced by one or more of tool diameter, tool geometry and distance between tool and part guide.

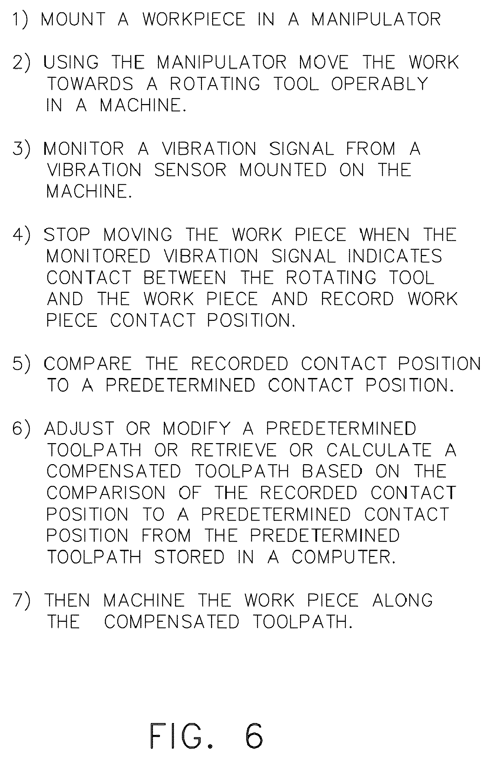

Illustrated in FIG. 6 is a flow chart of an exemplary method of determining an exemplary compensated toolpath as disclosed above. The flow chart includes:
1) Mount a workpiece in a manipulator.
2) Using the manipulator, move the workpiece towards a rotating tool operably mounted in a machine.
3) Monitor a vibration signal from a vibration sensor mounted on the machine.
4) Stop moving the workpiece when the monitored vibration signal indicates contact between the rotating tool and the workpiece and record workpiece contact position.
5) Compare the recorded contact position to a predetermined contact position.
6) Adjust or modify a predetermined toolpath or retrieve or calculate a compensated toolpath based on the comparison of the recorded contact position to a predetermined contact position from the predetermined toolpath stored in a computer.
7) Then machine the workpiece along the compensated toolpath.

A new compensated toolpath may be calculated and used to machine the same workpiece for each of multiple passes of the tool along the workpiece. The control of the machine, tool, and monitoring of the manipulator may be controlled by a computer in the machine and the manipulator may be a multi-axis manipulator.

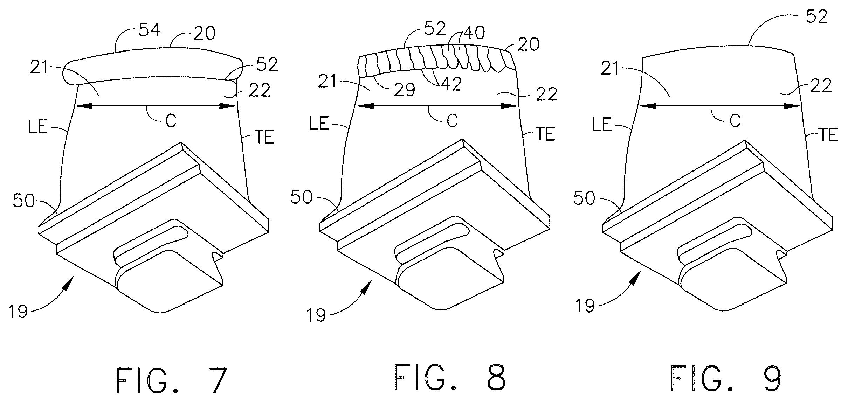

The machining illustrated in FIGS. 7-9 is an airfoil 21 blending method. The blending method includes grinding away excess metal 20 on a surface 22 of an airfoil 21 of the blade 19 for the purpose of blending the airfoil surface 22. The airfoil 21 extends radially between a base 50 and a tip 52 and has a chord C extending between leading and trailing edges LE, TE of the airfoil. The method includes adding repair material 54 at the tip 52 of the airfoil 21 as illustrated in FIG. 7. The method includes then making machining passes 40 at different chordwise locations 42 along the airfoil 21 between leading and trailing edges LE, TE of the airfoil 21 as illustrated in FIG. 8. The machining passes 40 machine away excess repair material and blend an airfoil surface 22 of the airfoil 21. The machining passes 40 are preferably made outwardly from the actual contact position 29 during probing through the tip 52 of the airfoil 21. The airfoil 21 is then polished smooth as illustrated in FIG. 9.

While there have been described herein what are considered to be preferred and exemplary embodiments of the present invention, other modifications of the invention shall be apparent to those skilled in the art from the teachings herein and, it is therefore, desired to be secured in the appended claims all such modifications as fall within the true spirit and scope of the invention. Accordingly, what is desired to be secured by Letters Patent of the United States is the invention as defined and differentiated in the following claims.

Various aspects and embodiments of the present invention are defined by the following clauses:
1. A method for machining a workpiece with a programmable, numerically controlled machining system, the system including numerical control means adapted to operate under the direction of a predetermined machining program including a predetermined toolpath extending between an initial machining point and an end machining point and at least one rotating cutting tool powered by a computer numerically controlled machine, the method comprising the following steps:
   (1) probing the workpiece with the rotating tool during relative motion therebetween,
   (2) monitoring a vibration signal from a vibration sensor mounted in the machining system,
   (3) recording a contact position of the workpiece when the monitored vibration signal indicates contact between the rotating tool and the workpiece,
   (4) comparing the recorded contact position to a predetermined initial machining point of the predetermined toolpath and calculating or retrieving a compensated toolpath based on the comparison wherein the predetermined toolpath extends between the initial machining point and the end machining point, and
   (5) machining the workpiece along the compensated toolpath.
2. The method as in clause 1, further comprising machining the workpiece with multiple passes wherein steps (1) through (5) are repeated for one or more of the passes.
3. The method as in clause 2, further comprising calibrating the machine by probing a calibration part having known dimensions with the cutting tool while monitoring a vibration signal from the vibration sensor during the probing with the cutting tool.
4. The method as in clause 3, further comprising determining tool parameters of the cutting tool during the calibrating that are influenced by at least one of a tool diameter, a tool geometry, and distance between the tool and a workpiece guide mounted to the machine.
5. The method as in clause 1, further comprising the compensated toolpath including an angle offset to a machining path coordinate system of the predetermined toolpath.
6. The method as in clause 5, further comprising machining the workpiece with multiple passes wherein steps (1) through (5) are repeated for one or more of the passes.
7. The method as in clause 6, further comprising calibrating the machine by probing a calibration part having known dimensions with the cutting tool while monitoring a vibration signal from the vibration sensor during the probing of the calibration part with the cutting tool and determining tool parameters of the cutting tool during the calibrating that are influenced by at least one of a tool diameter, a tool geometry, and distance between the tool and a workpiece guide mounted to the machine.
8. The method as in clause 1 further comprising:
   mounting the workpiece in a multi-axis manipulator of the numerically controlled machining system before step (1),
   during step (1) the probing includes moving the multi-axis manipulator holding the workpiece to provide the relative motion between the rotating tool and the workpiece, and
   during step (5) the machining the workpiece along the compensated toolpath includes moving the multi-axis manipulator holding the workpiece.
9. The method as in clause 8, further comprising machining the workpiece with multiple passes wherein steps (1) through (5) are repeated for one or more of the passes.
10. The method as in clause 9, further comprising calibrating the machine by probing a calibration part having known dimensions with the cutting tool while monitoring a vibration signal from the vibration sensor during the probing with the cutting tool and using results from the probing of the calibration part for determining tool parameters of the cutting tool that are influenced by at least one of a tool diameter, a tool geometry, and distance between the tool and a workpiece guide mounted to the machine.
11. The method as in clause 8, further comprising the compensated toolpath including an angle offset to a machining path coordinate system of the predetermined toolpath.
12. The method as in clause 11, further comprising machining the workpiece with multiple passes wherein steps (1) through (5) are repeated for one or more of the passes.
13. The method as in clause 8 further comprising the machine being a grinder and the rotating tool a grinding wheel.
14. The method as in clause 13, further comprising the compensated toolpath including an angle offset to a machining path coordinate system of the predetermined toolpath and machining the workpiece with multiple passes wherein steps (1) through (5) are repeated for one or more of the passes.
15. A method for repairing an airfoil tip using a programmable, numerically controlled machining system, the system including numerical control means adapted to operate under the direction of a predetermined machining program including a predetermined toolpath extending between an initial machining point and an end machining point, a grinding wheel powered by a computer numerically controlled machine, the method comprising:
   adding repair material at the tip of the airfoil,
   using the grinding wheel powered by the machine for making machining passes to machine away excess repair material and blend the airfoil surface of the airfoil at different chordwise locations along the airfoil between leading and trailing edges of the airfoil,
   at least one of the machining passes including the following steps:
      (1) probing the airfoil with the rotating grinding wheel during relative motion therebetween,
      (2) monitoring a vibration signal from a vibration sensor mounted in the machining system,
      (3) recording a contact position of the airfoil when the monitored vibration signal indicates contact between the rotating grinding wheel and the airfoil,
      (4) comparing the recorded contact position to a predetermined initial machining point of the predetermined toolpath and calculating or retrieving a compensated toolpath based on the comparison wherein the predetermined toolpath extends between the initial machining point and the end machining point, and
      (5) machining the airfoil along the compensated toolpath.
16. The method as in clause 15, further comprising mounting a gas turbine engine blade containing the airfoil in a multi-axis manipulator of the numerically controlled machining system before step (1) and the probing the airfoil with the rotating grinding wheel during relative motion therebetween includes moving the multi-axis manipulator holding the blade relative to the machine.
17. The method as in clause 16, further comprising the compensated toolpath including an angle offset to a machining path coordinate system of the predetermined toolpath.
18. The method as in clause 17, further comprising calibrating the machine by probing a calibration part having known dimensions with the cutting tool while monitoring a vibration signal from the vibration sensor during the probing of the calibration part with the cutting tool and determining tool parameters of the cutting tool during the calibrating that are influenced by at least one of a tool diameter, a tool geometry, and distance between the tool and a workpiece guide mounted to the machine.
19. The method as in clause 18, further comprising using the probing of the calibration part while monitoring the vibration signal from the vibration sensor and determining tool parameters from the probing of the calibration part that are influenced by at least one of a tool diameter, a tool geometry, and distance between the tool and a workpiece guide mounted to the machine.
20. The method as in clause 17, further comprising using a workpiece guide mounted on the machine for guiding the blade and the airfoil through the machining passes and using a compliance means for urging the grinding wheel against the workpiece.

## Claims

1. A method for machining a workpiece (18) with a programmable, numerically controlled machining system (8), the system (8) including numerical control means adapted to operate under the direction of a predetermined machining program including a predetermined toolpath (34) extending between an initial machining point (36) and an end machining point (38) and at least one rotating cutting tool (12) powered by a computer numerically controlled machine (10), the method comprising the following steps:
(1) probing the workpiece (18) with the rotating tool (12) during relative motion therebetween,
(2) monitoring a vibration signal from a vibration sensor (28) mounted in the machining system (8),
(3) recording a contact position (29) of the workpiece (18) when the monitored vibration signal indicates contact between the rotating tool (12) and the workpiece (18),
(4) comparing the recorded contact position (29) to a predetermined initial machining point (36) of the predetermined toolpath (34) and calculating or retrieving a compensated toolpath (35) based on the comparison wherein the predetermined toolpath (34) extends between the initial machining point (36) and the end machining point (38), and
(5) machining the workpiece (18) along the compensated toolpath (35).

2. The method as claimed in claim 1, further comprising machining the workpiece (18) with multiple passes (40) wherein steps (1) through (5) are repeated for one or more of the passes (40).

3. The method as claimed in claim 2, further comprising calibrating the machine (10) by probing a calibration part (60) having known dimensions with the cutting tool (12) while monitoring a vibration signal from the vibration sensor (28) during the probing with the cutting tool (12).

4. The method as claimed in claim 3, further comprising determining tool parameters of the cutting tool (12) during the calibrating that are influenced by at least one of a tool diameter, a tool geometry, and distance between the tool and a workpiece guide (30) mounted to the machine (10).

5. The method as claimed in claim 1, further comprising the compensated toolpath (35) including an angle offset (48) to a machining path coordinate system (46) of the predetermined toolpath (34).

6. The method as claimed in claim 5, further comprising machining the workpiece with multiple passes wherein steps (1) through (5) are repeated for one or more of the passes.

7. The method as claimed in claim 6, further comprising calibrating the machine (10) by probing a calibration part (60) having known dimensions with the cutting tool (12) while monitoring a vibration signal from the vibration sensor (28) during the probing of the calibration part with the cutting tool (12) and determining tool parameters of the cutting tool (12) during the calibrating that are influenced by at least one of a tool diameter, a tool geometry, and distance between the tool (12) and a workpiece guide (30) mounted to the machine (10).

8. The method as claimed in claim 1 further comprising:
mounting the workpiece (18) in a multi-axis manipulator (16) of the numerically controlled machining system (8) before step (1),
during step (1) the probing includes moving the multi-axis manipulator (16) holding the workpiece (18) to provide the relative motion between the rotating tool (12) and the workpiece (18), and
during step (5) the machining the workpiece (18) along the compensated toolpath (35) includes moving the multi-axis manipulator (16) holding the workpiece (18).

9. The method as claimed in claim 8, further comprising the machine (10) being a grinder and the rotating tool (12) a grinding wheel (14).

10. The method as claimed in claim 8, further comprising machining the workpiece with multiple passes wherein steps (1) through (5) are repeated for one or more of the passes.

11. A method for repairing an airfoil (21) tip (52) using a programmable, numerically controlled machining system (8), the system (8) including numerical control means adapted to operate under the direction of a predetermined machining program including a predetermined toolpath (34) extending between an initial machining point (36) and an end machining point (38), a grinding wheel (14) powered by a computer numerically controlled machine (10), the method comprising:
adding repair material (54) at the tip (52) of the airfoil (21),
using the grinding wheel (14) powered by the machine (10) for making machining passes (40) to machine away excess repair material and blend the airfoil surface (22) of the airfoil (21) at different chordwise locations (42) along the airfoil (21) between leading and trailing edges (LE, TE) of the airfoil (21),
at least one of the machining passes (40) including the following steps:
(1) probing the airfoil (21) with the rotating grinding wheel (14) during relative motion therebetween,
(2) monitoring a vibration signal from a vibration sensor (28) mounted in the machining system (8),
(3) recording a contact position (29) of the airfoil (21) when the monitored vibration signal indicates contact between the rotating grinding wheel (14) and the airfoil (21),
(4) comparing the recorded contact position (29) to a predetermined initial machining point (36) of the predetermined toolpath (34) and calculating or retrieving a compensated toolpath (35) based on the comparison wherein the predetermined toolpath (34) extends between the initial machining point (36) and the end machining point (38), and
(5) machining the airfoil (21) along the compensated toolpath (35).

12. The method as claimed in claim 11, further comprising mounting a gas turbine engine blade (19) containing the airfoil (21) in a multi-axis manipulator (16) of the numerically controlled machining system (8) before step (1) and the probing the airfoil (21) with the rotating grinding wheel (14) during relative motion therebetween includes moving the multi-axis manipulator (16) holding the blade (19) relative to the machine (10).

13. The method as claimed in claim 12, further comprising the compensated toolpath (35) including an angle offset (48) to a machining path coordinate system (46) of the predetermined toolpath (34).

14. The method as claimed in claim 13, further comprising calibrating the machine (10) by probing a calibration part (60) having known dimensions with the cutting tool (12) while monitoring a vibration signal from the vibration sensor (28) during the probing of the calibration part (60) with the cutting tool (12) and determining tool parameters of the cutting tool (12) during the calibrating that are influenced by at least one of a tool diameter, a tool geometry, and distance between the tool (12) and a workpiece guide (30) mounted to the machine (10).

15. The method as claimed in claim 13, further comprising using a workpiece guide (30) mounted on the machine (10) for guiding the blade (19) and the airfoil (21) through the machining passes (40) and using a compliance means (32) for urging the grinding wheel (14) against the workpiece (18).
